Europäisches Patentamt

European Patent Office

Office européen des brevets

(11) Numéro de publication : **0 060 790**
**B1**

(12) **FASCICULE DE BREVET EUROPÉEN**

(45) Date de publication du fascicule du brevet :
07.05.86

(51) Int. Cl.⁴ : **H 02 H 3/33**, H 02 H 3/027,
H 02 H 3/06

(21) Numéro de dépôt : **82400463.4**

(22) Date de dépôt : **12.03.82**

(54) Perfectionnements aux disjoncteurs sensibles aux courants de fuite.

(30) Priorité : **18.03.81 FR 8105451**

(43) Date de publication de la demande :
**22.09.82 Bulletin 82/38**

(45) Mention de la délivrance du brevet :
**07.05.86 Bulletin 86/19**

(84) Etats contractants désignés :
**CH DE GB IT LI NL SE**

(56) Documents cités :
**EP-A- 0 020 080**
**DE-A- 2 924 122**
**FR-A- 1 324 416**
**FR-A- 2 177 426**
**US-A- 4 084 204**

(73) Titulaire : **Lewiner, Jacques**
**5, rue Bory d'Arnex**
**F-92210 Saint-Cloud (FR)**

**Perino, Didier**
**10, rue de Bellevue**
**F-92150 Suresnes (FR)**

**Hennion, Claude**
**18, rue Flatters**
**F-75005 Paris (FR)**

(72) Inventeur : **Lewiner, Jacques**
**5, rue Bory d'Arnex**
**F-92210 Saint-Cloud (FR)**
Inventeur : **Perino, Didier**
**10, rue de Bellevue**
**F-92150 Suresnes (FR)**
Inventeur : **Hennion, Claude**
**18, rue Flatters**
**F-75005 Paris (FR)**

(74) Mandataire : **Behaghel, Pierre et al**
**CABINET PLASSERAUD 84 rue d'Amsterdam**
**F-75009 Paris (FR)**

## Description

L'invention est relative aux disjoncteurs ou dispositifs de sécurité montés sur l'alimentation en courant alternatif d'un récepteur électrique et destinés à couper automatiquement ou « disjoncter » cette alimentation dès l'apparition d'un courant de fuite entre un point quelconque dudit récepteur et la masse.

Par le mot « récepteur » on entend ci-dessus et dans la suite tout circuit ou appareil électrique dont le fonctionnement fait appel à une alimentation en courant électrique alternatif, y compris les conducteurs d'alimentation de ce circuit ou appareil.

Dans les modes de réalisation préférés, le courant de fuite à surveiller correspond à une portion du courant d'alimentation du récepteur, portion qui, parvenue de la source d'alimentation électrique au récepteur en empruntant l'un au moins des fils conducteurs d'un cordon d'alimentation, ne retourne pas vers la source en empruntant ledit cordon, mais s'écoule vers la masse à travers un corps humain mis involontairement en contact avec une portion conductrice dénudée du récepteur considéré, ce qui crée un risque d'électrocution particulièrement grave en ambiance humide.

L'invention vise plus particulièrement, parmi les disjoncteurs du genre en question, ceux qui comprennent un transformateur différentiel monté sur les fils d'alimentation du récepteur à protéger, transformateur agencé de façon à engendrer automatiquement, dans un fil conducteur indépendant de ceux du cordon d'alimentation, une tension électrique $V_0$ lorsqu'il y a déséquilibre entre les courants circulant dans lesdits fils d'alimentation, et des moyens pour exploiter ladite tension $V_0$ de façon à ouvrir automatiquement un interrupteur monté sur l'un au moins desdits fils dès que l'amplitude de la tension $V_0$ dépasse au moins un seuil prédéterminé, ledit interrupteur étant constitué par le contact d'un relais agencé de façon à être ouvert tant que ce relais n'est pas alimenté électriquement.

De tels disjoncteurs ont par exemple été décrits dans les documents FR-A-1 324 416 et DE-A-2 924 122.

L'invention a pour but, surtout, de rendre les disjoncteurs du genre en question tels qu'ils répondent mieux que jusqu'à ce jour aux diverses exigences de la pratique, notamment en ce qu'ils assurent une protection avec un degré de sécurité plus élevé, en particulier en déclenchant aussi bien une disjonction très rapide lors de la création d'un courant de fuite intense qu'une disjonction moins rapide, mais encore effective, lors de la création d'un courant de fuite relativement peu intense, mais désagréablement ressenti par le corps humain traversé par ce courant s'il est prolongé au-delà d'une certaine durée, et ce tout en demeurant pratiquement insensibles aux parasites électriques.

Pour atteindre ce but il a déjà été proposé dans le document EP-A1-0 020 080 de recourir à des circuits résistance-capacité en vue de commander le déclenchement d'un disjoncteur sensible à l'établissement d'un courant de fuite avec un temps de réponse d'autant plus faible que l'intensité du courant de fuite est plus élevée. Mais avec ces circuits le produit du temps de réponse par l'intensité est sensiblement constant, ce qui ne permet pas de tenir compte en pratique de tous les types de risques vis-à-vis duquel la protection est requise. L'invention pallie cet inconvénient.

A cet effet, les disjoncteurs du genre en question selon l'invention sont essentiellement caractérisés en ce que les moyens d'exploitation de la tension $V_0$ sont montés de façon à être alimentés par la source de courant électrique dès branchement du récepteur sur la source, c'est-à-dire sont branchés sur les fils d'alimentation entre cette source et l'interrupteur, et en ce que lesdits moyens d'exploitation de la tension $V_0$ sont agencés de façon à faire alimenter électriquement le relais par la source ou à autoriser cette alimentation lors des branchements normaux du récepteur sur cette source, et à couper automatiquement ladite alimentation dès création, entre le récepteur et la masse, d'un courant de fuite dangereux ou au moins désagréable par son intensité et/ou sa durée, les moyens d'exploitation de la tension $V_0$ comprenant à cet effet une chaîne de n amplificateurs en série $A_i$, n étant un entier supérieur à 1 et l'indice i un entier compris entre 1 et n, bornes incluses, dont le premier amplificateur d'indice i = 1 reçoit la tension $V_0$ après son éventuel redressement, un nombre n de circuits de retard, chaque circuit de retard $R_i$ recevant à son entrée la tension de sortie d'un amplificateur $A_i$ et produisant à sa sortie une impulsion de tension $U_i$ retardée d'un retard $t_i$ par rapport à l'instant $t_0$ auquel apparaît la tension $V_0$ lorsque la durée réelle de cette tension $V_0$ est supérieure au retard $t_i$, les valeurs des retard $t_i$ croissant avec l'indice i, un organe à n entrées et à une sortie recevant les impulsions $U_i$ sur ses différentes entrées et émettant un signal de commande sur sa sortie dès que l'amplitude de l'une de ces impulsions $U_i$ atteint ou dépasse un seuil W prédéterminé à des moyens électroniques connectés à la sortie dudit organe et agencés de façon à couper automatiquement l'alimentation du relais dès émission d'un signal de commande sur ladite sortie.

Dans des modes de réalisation préférés, on a recours en outre à l'une et/ou à l'autre des dispositions suivantes considérées séparément ou en combinaison :

— des moyens de réarmement sont prévus pour débloquer les moyens électroniques de coupure après qu'ils aient commandé la coupure du relais, ce déblocage ayant pour effet d'assurer ou d'autoriser à nouveau l'alimentation électrique du relais,

— les moyens de réarmement sont commandables manuellement,

— les moyens de réarmement sont agencés de façon telle qu'ils soient actionnés automatiquement après une première durée $d_1$ postérieure à chaque coupure de l'alimentation du relais, que ce relais soit alors à nouveau alimenté pendant une seconde durée $d_2$ relativement courte, et qu'au terme de cette seconde durée $d_2$ l'alimentation du relais soit maintenue ou à nouveau coupée en fonction de la disparition ou de la persistance à cet instant de la tension de défaut $V_0$,

— les moyens de réarmement selon l'alinéa précédent comprennent deux circuits monostables en cascade, une bascule de type D connectée à la sortie de l'amplificateur d'indice i = n et à la sortie du second circuit monostable, et une porte OU raccordée à la sortie de la bascule de type D et à la sortie du premier circuit monostable,

— les moyens de réarmement selon l'un quelconque des deux alinéas précédents sont agencés de façon telle que le cycle de réarmement et de nouveau blocage des moyens électroniques de coupure soit répété au moins une fois avant d'aboutir à une coupure définitive en cas de persistance de la tension de défaut $V_0$,

— les durées $d_1$ et $d_2$ ci-dessus sont respectivement de l'ordre de 100 ms et de 30 ms,

— le retard $t_1$ est supérieur à la durée de la portion initiale à grande amplitude des parasites électriques, mais inférieur à la durée maximum admissible pour les courants de fuite de grande intensité, ce retard étant de préférence de l'ordre de 10 à 20 ms,

— les composants du disjoncteur sont choisis de façon telle que l'amplitude de l'impulsion sortant de l'amplificateur d'indice i = n atteigne le seuil W uniquement lorsque l'intensité du courant de fuite dépasse la valeur maximum $I_M$ supportable en régime prolongé par un corps humain, la valeur de cette intensité $I_M$ étant de préférence de l'ordre de 1 mA,

— l'un au moins des circuits à retard $R_i$ comprend successivement un circuit en dérivation composé d'une résistance et d'une capacité en parallèle l'une sur l'autre, un premier inverseur, une seconde résistance, une seconde capacité mise en dérivation sur la sortie de la seconde résistance et un second inverseur dont l'entrée est également connectée à la sortie de la seconde résistance.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant aux dessins ci-annexés d'une manière bien entendu non limitative.

La figure 1 de ces dessins, est le schéma général d'un disjoncteur établi selon l'invention.

La figure 2 montre plus en détail la constitution de l'un des sous-ensembles compris par ce disjoncteur.

La figure 3 montre une succession de graphiques permettant d'expliquer le fonctionnement du disjoncteur.

La figure 4 est le schéma d'une variante intéressante, établie conformément à l'invention, d'une partie du disjoncteur ci-dessus.

La figure 5 montre une succession de graphiques permettant d'expliquer le fonctionnement de cette variante.

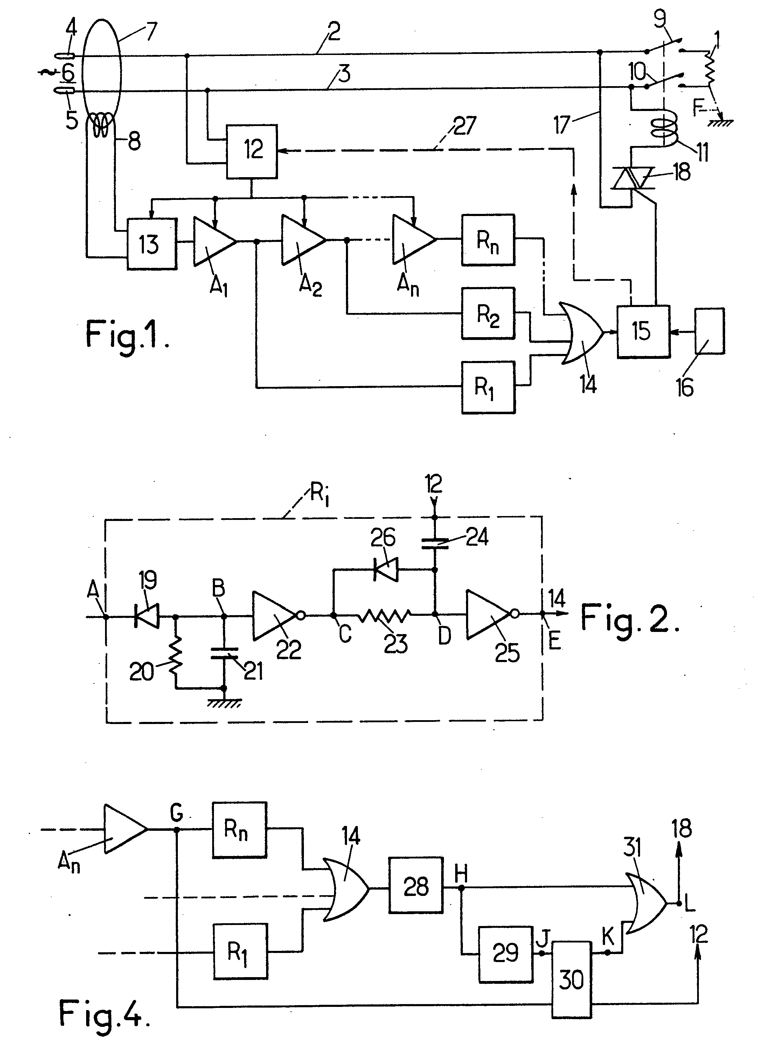

Dans le mode de réalisation schématisé sur la figure 1, le récepteur électrique à surveiller, qui est par exemple un sèche-cheveux ou un rasoir électrique, comprend une charge 1 et des fils d'alimentation 2 et 3 rassemblés dans un cordon unique.

Les extrémités de ces fils 2 et 3 les plus éloignées de la charge 1 sont connectées à autant de fiches 4 et 5 facilement raccordables à un réseau 6 de courant alternatif : s'il s'agit de monophasé, ces ensembles fils-fiches sont au nombre de deux, comme illustré, et correspondent respectivement à la phase et au neutre ; s'il s'agit de triphasé, les ensembles fils-fiches en question sont au nombre de trois, correspondant aux trois phases, ou de quatre, correspondant aux trois phases et au neutre.

Le disjoncteur considéré est destiné à couper automatiquement l'un au moins des fils 2 et 3, et de préférence tous ces fils, dès qu'un courant de fuite F dangereux par son intensité et/ou sa durée est établi entre la charge 1 et la masse, notamment à travers un corps humain.

Ce disjoncteur comprend ici :

— un transformateur différentiel 7 monté sur les deux fils 2 et 3 agencé de façon à engendrer automatiquement dans un autre fil 8 une tension alternative $V_0$ lorsqu'il y a déséquilibre entre les courants circulant dans les deux fils 2 et 3,

— et des moyens pour exploiter la tension $V_0$ de façon à ouvrir automatiquement deux interrupteurs 9 et 10 montés respectivement sur les fils 2 et 3 dès que, après un retard minimum prédéterminé, $V_0$ atteint un seuil prédéterminé W et/ou dès que la durée de cette tension $V_0$ atteint un seuil prédéterminé, si bien entendu son amplitude dépasse elle-même un minimum prédéterminé.

Les interrupteurs 9 et 10 sont constitués par les contacts d'un relais 11 établi de façon à être ouverts tant que ce relais n'est pas alimenté électriquement.

En outre les moyens d'exploitation de la tension $V_0$ engendrée dans le fil 8 sont montés de façon à être alimentés par le réseau 6 dès branchement du récepteur 1 sur ce réseau : le circuit 12 qui engendre la tension d'alimentation continue desdits moyens d'exploitation est donc branché sur les deux fils 2 et 3 entre les fiches 4 et 5 de ces fils et les interrupteurs 9 et 10.

Enfin lesdits moyens d'exploitation de la tension $V_0$ sont agencés de façon à faire alimenter électriquement le relais 11 par le réseau ou à autoriser cette alimentation lors des branchements « normaux » du récepteur, c'est-à-dire en absence de courant de fuite F, et à couper automatiquement l'alimentation dudit relais 11 à partir du réseau dès création d'un tel courant de fuite F considéré comme dangereux ou au moins désagréable par son intensité et/ou sa durée.

En d'autres termes, les moyens en question sont agencés de façon à commander ladite coupure :

— presque instantanément, savoir en une durée inférieure à 20 ms ou même à 10 ms quand le courant de fuite est très intense, son intensité atteignant ou dépassant par exemple 200 ou 500 mA,

— avec un retard d'autant plus important, consécutif au début de l'établissement du courant de fuite F, que l'intensité de courant est moins élevée,

— et après un retard maximum relativement long, pouvant atteindre ou même dépasser 50 ms si le courant de fuite considéré se prolonge sur toute l'étendue d'un tel retard et présente une intensité dépassant le seuil considéré comme désagréable pour un être humain, seuil par exemple de l'ordre de 1 mA.

A cet effet, les moyens d'exploitation en question comprennent :

— un système de redressement sans seuil 13 auquel est connecté le fil 8,

— une chaîne d'amplificateurs en série $A_1$, $A_2$ ... $A_n$, n étant un entier supérieur à 1,

— n circuits temporisateurs $R_1$, $R_2$ ... $R_n$ connectés chacun à la sortie d'un amplificateur $A_1$, $A_2$ ... $A_n$,

— une porte OU 14 à entrées multiples recevant les différentes sorties des circuits à retard $R_1$, $R_2$ ...$R_n$ et propre à être déclenchée dès que l'amplitude de la tension appliquée sur l'une quelconque de ses entrées atteint le seuil prédéterminé W,

— une bascule 15 dont l'une des deux entrées est connectée à la seconde entrée de la bascule 15,

— un circuit 17 assurant l'alimentation électrique du relais 11 à partir du réseau 6 et branché à cet effet sur les fils 2 et 3 en des emplacements explicités plus loin,

— et un interrupteur électronique 18 tel qu'un redresseur contrôlé ou analogue monté sur le circuit 17, l'électrode de commande de cet interrupteur étant connectée à la sortie de la bascule 15.

Chacun des circuits temporisés $R_i$ (i étant un indice compris entre 1 et n, bornes incluses) est agencé de façon à élaborer une impulsion de tension $U_i$ d'amplitude $V_i$ avec un retard $t_i$ postérieur à l'instant $t_0$ correspondant au début d'émission de chaque tension de défaut $V_0$ sur le fil 8.

Les valeurs de ces retards $t_i$ croissent avec l'incide i.

Le premier retard $t_1$ est supérieur à la durée de la portion initiale transitoire à grande amplitude des parasites électriques, mais inférieur à la durée maximum admissible pour les courants de fuite F de grande intensité, savoir pour les valeurs de cette intensité supérieures ou égales à 200 mA : ce retard est de préférence de l'ordre de 10 à 20 ms.

Le dernier retard $t_n$ est relativement long : sa valeur peut atteindre ou même dépasser 50 ms. Les impulsions $U_n$ émises au bout de ce retard $t_n$ ne sont aptes à déclencher la porte 14 que si leur amplitude atteint le seuil W : c'est le cas uniquement si l'intensité du courant de fuite F correspondant, relativement prolongé, dépasse le seuil considéré comme désagréable lorsqu'il traverse le corps humain, ce seuil étant généralement de l'ordre du milliampère.

Le fonctionnement général du disjoncteur décrit ci-dessus est le suivant.

Normalement, c'est-à-dire dans le cas général où aucun courant de fuite F n'est engendré, le branchement du récepteur 1 sur le réseau 6 se traduit immédiatement par l'alimentation électrique du relais 11 à travers le circuit 17 et dont par la mise en service dudit récepteur 1.

Les courants qui circulent dans les deux fils 2 et 3 étant équilibrés, aucune tension différentielle n'est induite dans le fil 8 et l'ensemble des moyens d'exploitation propres à bloquer l'organe 18 demeure inactif.

Dès création d'un courant de fuite F, un déséquilibre s'établit entre les courants circulant dans les deux fils 2 et 3, ce qui induit une tension de défaut $V_0$ sur le fil 8.

Plusieurs cas peuvent alors se présenter :

— si l'amplitude de cette tension $V_0$ est suffisamment élevée, l'amplitude de l'impulsion $U_1$ sortant de l'ensemble composé par le premier amplificateur $A_1$ et par le circuit $R_1$ atteint ou dépasse la valeur de seuil W, de sorte que la porte 14 est déclenchée après le retard $t_1$ ; ce déclenchement se traduit par le basculement de la porte 15, lequel a pour effet de bloquer l'organe 18 et donc de couper l'alimentation du relais 11, ce qui couvre immédiatement les interrupteurs 9 et 10 : la réponse de cette chaîne d'organes est suffisamment rapide pour interrompre le courant de fuite F avant création de dommages ;

— si l'intensité du courant de fuite F est inférieure à un seuil $I_M$; au-delà duquel son existence se traduit par une perception désagréable du corps humain traversé par lui, la chaîne de surveillance ne réagit pas et le récepteur 1 demeure alimenté ;

— si le seuil $I_M$ est dépassé de peu par le courant de fuite F, mais pour une durée prolongée dépassant le retard $t_n$ ci-dessus, l'impulsion $U_n$ sortant du circuit à retard $R_n$ présente une amplitude W suffisante pour déclencher la porte 14 et assurer la coupure décrite ci-dessus de l'alimentation du récepteur 1 ;

— si l'amplitude du courant de fuite F est intermédiaire entre celles susceptibles de déclencher la porte 14 par respectivement la voie d'indice 1 et la voie d'indice n, ce courant se traduit par un déclenchement de ladite porte après un retard intermédiaire $t_i$ compris entre les deux retards $t_1$ et $t_n$, par l'intermédiaire du circuit à retard correspondant $R_i$.

La protection ainsi assurée par le disjoncteur ci-dessus est particulièrement complète car elle tient compte à la fois de l'intensité et de la durée du courant de fuite et pourtant, ainsi qu'il sera expliqué plus loin, il n'est pas pour autant actionné par les simples parasites électroniques apparaissant dans le courant électrique débité par le réseau, parasites dont la portion transitoire initiale, de forte amplitude, ne dure généralement pas plus de quelques millisecondes.

Les circuits $R_i$ peuvent être composés très simplement par une résistance branchée sur la sortie de l'amplificateur $A_i$ correspondant et par une capacité montée en dérivation entre la sortie de cette résistance et la masse ou un potentiel constant : les valeurs de cette résistance et de cette capacité sont choisies en fonction du retard $t_i$ à établir entre l'entrée et la sortie du circuit $R_i$ considéré.

Un autre mode de réalisation avantageux d'un tel circuit $R_i$ est schématisé sur la figure 2.

Ce circuit comprend la série des composants suivants :

— une diode 19,

— en dérivation entre la sortie de la diode 19 et la masse, l'ensemble d'une résistance 20 et d'une capacité 21 montées en parallèles l'une sur l'autre.

— un premier inverseur 22,

— une résistance 23,

— une capacité 24 montée en dérivation entre la sortie de la résistance 23 et un potentiel constant élaboré par le circuit 12 ci-dessus et d'amplitude par exemple égale à —W,

— et un second inverseur 25.

Enfin, une diode 26 de même sens que la diode 19 est montée en parallèle sur la résistance 23.

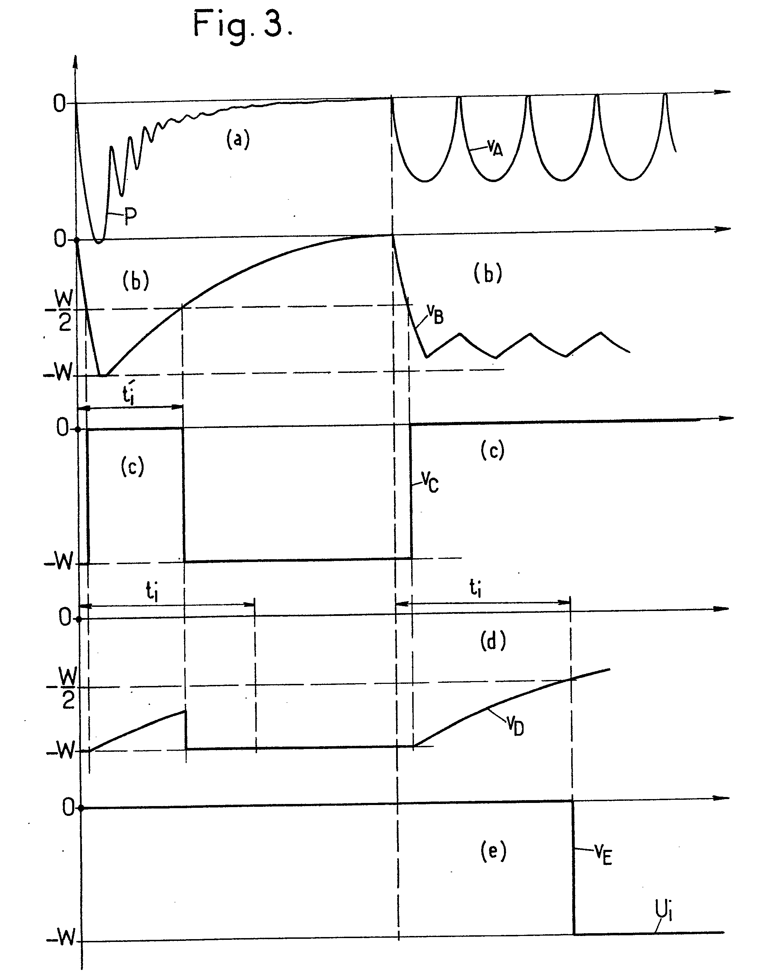

La forme des tensions développées en différents points de ce circuit $R_i$ est représentée sur les différents graphiques de la figure 3, en fonction du temps porté en abscisses : les graphiques a, b, c, d et e concernent respectivement l'entrée A du circuit $R_i$, l'entrée B de l'inverseur 22, la sortie C de cet inverseur 22, l'entrée D de l'inverseur 25, et la sortie E de cet inverseur 25 et du circuit $R_i$.

On étudiera d'abord, en se référant aux moitiés de droite de ces graphiques, les formes des tensions créées aux points A à E par une tension alternative $V_o$ signalant la création d'un courant de fuite F et engendrée dans le fil 8.

Cette tension $V_o$ produit en A, après au moins la traversée du système redresseur 13, une tension ondulée redressée $v_A$ composée de demi-ondulations contiguës de même signe.

En B, la tension $v_B$ résultant de la succession des charges et décharges engendrées aux bornes de la capacité 21 a la forme d'une suite de dents de scie éloignées de l'ordonnée nulle, le potentiel correspondant à cette suite demeurant constamment inférieur à un seuil prédéterminé qui peut être considéré comme égal à —W/2.

Dès que cette tension B atteint, en croissant ou décroissant à partir de la valeur nulle, le seuil en question, l'inverseur 22 change d'état et sa sortie $v_C$ passe ici de —W à zéro.

A partir de cet instant, le condensateur 24 se charge progressivement à travers la résistance 23 avec laquelle il forme un circuit intégrateur : cette charge correspond à la tension $v_D$. Au bout du temps $t_i$ dépendant des valeurs de ces deux composants 23 et 24, l'inverseur 25 change d'état à son tour de sorte que sa sortie $v_E$ passe de zéro à —W : c'est là le signal $U_i$, dont la valeur est suffisante pour déclencher la porte 14.

Les mêmes graphiques de la figure 3, considérés dans leurs moitiés de gauche, permettent de faire comprendre la raison pour laquelle le disjoncteur selon l'invention demeure insensible aux parasites électriques dont les portions transitoires initiales présentent de fortes amplitudes mais de courtes durées.

Un tel parasite après son redressement par le circuit 13 est représenté en P sur le graphique a.

Au début de la manifestation d'un tel parasite P, la tension au point B devient certes rapidement inférieure au seuil —W/2, ainsi que visible sur le graphique b, mais les valeurs des résistances 20 et 23 et des capacités 21 et 24 sont choisies de façon telle que ladite tension au point B ne reste pas assez longtemps inférieure à —W/2, et la sortie C repasse donc au potentiel —W au bout d'un temps $t'_i$ relativement court (voir les graphiques b, c et d), inférieur au retard $t_i$ : la croissance ou décroissance de la tension $v_D$ ne dure alors pas suffisamment pour que cette tension puisse atteindre la valeur de seuil —W/2 et donc faire changer d'état l'inverseur 25 : aucun signal n'est donc engendré à la sortie E et la porte 14 n'est pas déclenchée.

La diode 26 a pour but de décharger instantanément la capacité 24 dès que la tension au point C redevient égale à —W : de la sorte deux parasites électriques survenant l'un après l'autre avec un écart de temps relativement faible, savoir inférieur à $t_i$, ne sont pas « vus » par l'intégrateur 23-24 comme un seul signal prolongé dont la durée pourrait dépasser $t_i$ et donc déclencher la porte, mais comme deux signaux distincts entre lesquels l'ensemble est remis à zéro.

En d'autres termes, le circuit considéré permet d'effectuer un « tri » des signaux appliqués sur lui, seuls ceux dont la constante de temps est supérieure à celle déterminée par les composants 23 et 24 pouvant donner lieu à l'émission d'un signal de sortie $U_i$.

Les différents autres circuits ou sous-ensembles $A_i$ et 12 à 16 peuvent être constitués de toute manière désirable.

Le circuit de réarmement 16 peut être agencé de façon à être actionné manuellement, c'est-à-dire moyennant une intervention volontaire et consciente de l'usager du récepteur 1.

Il peut également être conçu de façon telle que le réarmement exige le remplacement d'un fusible, qui serait notamment compris par le circuit 12 d'élaboration des tensions continues d'alimentation : c'est ce qui a été schématisé par la flèche 27 sur la figure 1, le circuit 12 étant alors connecté à la seconde sortie de la bascule 15 de façon telle que le fusible en question soit coupé lorsque la bascule 15 passe de son état correspondant à la conduction de l'interrupteur électronique 18 à son état opposé.

On va maintenant décrire une variante particulièrement avantageuse permettant de conserver toute la sensibilité du disjoncteur sans pour autant que celui-ci puisse être déclenché définitivement par la simple apparition de parasites électriques relativement longs dans le courant d'alimentation du relais.

Il faut éviter en effet que de tels parasites ne puissent disjoncter définitivement ce relais vu qu'ils ne présentent pas de danger pour l'usager et que la répétition des inconvénients dus à de telles disjonctions (nécessité après chaque disjonction d'un réarmement manuel ou même d'un remplacement de fusible) pourrait à la longue conduire l'usager à renoncer à la protection due à la présence même du disjoncteur.

A cet effet, on agence les moyens de réarmement de façon telle qu'ils soient automatiquement actionnés au bout d'une première durée $d_1$ postérieure à chaque coupure, ce réarmement étant automatiquement suivi, après une seconde durée $d_2$, d'une nouvelle coupure si, et seulement si, un défaut subsiste à cet instant.

L'expérience montre que, si la première durée $d_1$ est de l'ordre de 100 ms, on n'observe plus aucune trace du défaut initial à l'instant considéré — postérieur d'une durée $d_1 + d_2$ à la coupure initiale — si ce défaut était un parasite même relativement long.

Si au contraire le défaut en question correspond bien à un courant de fuite, ce défaut persiste à l'instant considéré et l'alimentation du relais est à nouveau coupée à cet instant.

Cette nouvelle coupure peut être définitive ou au contraire suivie d'un ou plusieurs cycles de réarmement-blocage identiques à celui décrit ci-dessus, cycles permettant de contrôler à plusieurs reprises la persistance éventuelle du défaut initialement détecté.

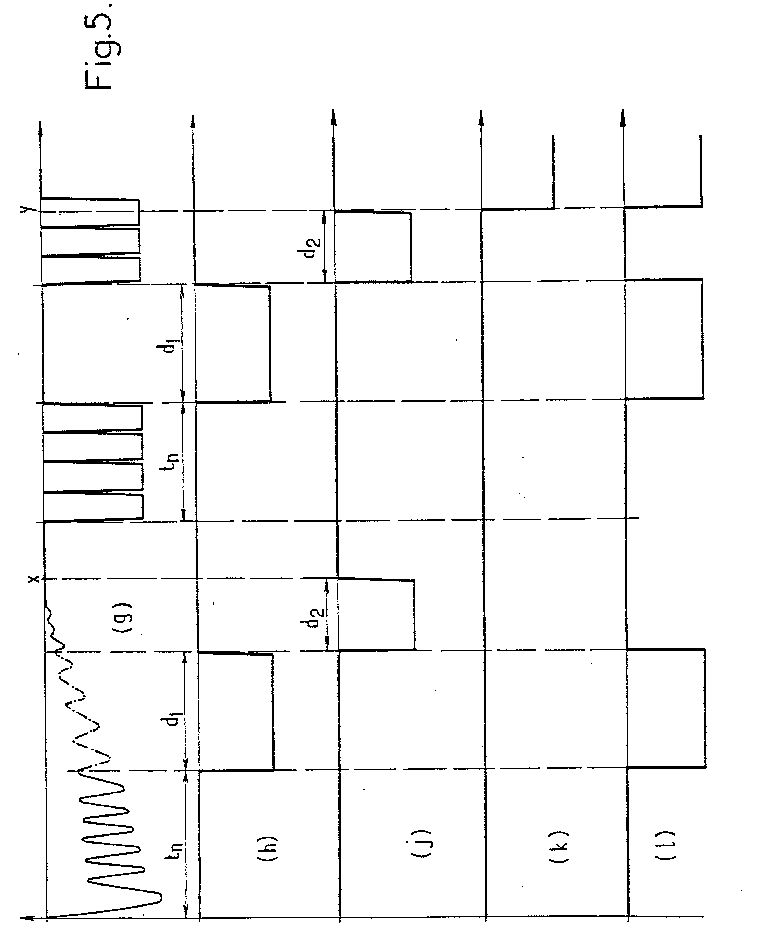

Dans le mode de réalisation des figures 4 et 5, c'est la première hypothèse qui a été retenue.

Dans ce mode de réalisation, les moyens de réarmement comportent :

— un premier circuit monostable 28 de durée $d_1$ alimenté par la sortie de la porte OU 14,

— un second circuit monostable 29 de durée $d_2$ alimenté par la sortie du premier circuit monostable 28,

— une bascule 30 de type D dont l'entrée d'horloge est alimentée par la sortie du second circuit monostable 29 et dont l'autre entrée est connectée à la sortie de l'amplificateur $A_n$,

— et une porte OU 31 dont les deux entrées sont connectées respectivement à la sortie du premier circuit monostable 28 et à l'une des sorties de la bascule 30.

La forme des tensions développées en différents points de ce circuit est représentée sur les différents graphiques de la figure 5, en fonction du temps porté en abscisses : les graphiques g, h, j, k et l concernent respectivement les sorties G de l'amplificateur $A_n$, H du premier circuit monostable 28, J du second circuit monostable 29, K de la bascule 30 et L de la porte 31.

On notera que les graphiques a de la figure 3 et g de la figure 5 sont similaires.

La partie de gauche de chaque graphique concerne l'hypothèse d'un parasite relativement long et la partie de droite, celle d'un véritable courant de fuite.

Dans chaque cas, l'existence d'une tension relativement élevée à la sortie G au bout d'un temps $t_n$ postérieur au début de la manifestation d'un signal de tension $V_o$ se traduit par l'actionnement du premier circuit monostable 28, ce qui a pour effet de couper l'alimentation du relais 11 par ouverture de l'interrupteur 18, et ce pendant la durée $d_1$.

A la fin de cette durée $d_1$, le retour du premier circuit monostable 28 en sa position initiale a pour double effet, au même instant, d'alimenter à nouveau le relais 11 par fermeture de l'interrupteur 18 et d'actionner le second circuit monostable 29.

C'est à la fin de la seconde durée $d_2$, consécutive à cet instant d'actionnement du second circuit monostable 29, que l'évolution du réarmement diffère selon que le défaut qui était à l'origine de la disjonction initiale est un parasite relativement long ou un courant de fuite.

Dans le premier cas, ainsi que visible à l'instant x sur la figure 5, la tension d'erreur présente au point G est devenue insuffisante pour renouveler la disjonction de sorte que le relais 11 demeure alimenté.

Dans le second cas, ainsi que visible à l'instant y sur la figure 5, la tension d'erreur présente au point G demeure suffisante pour que sa recopie à la sortie de la bascule 30 de type D ouvre à nouveau l'interrupteur 18 et donc coupe définitivement l'alimentation du relais 11.

Pour éviter que l'instant de cette recopie ne corresponde exactement à l'un des intervalles compris entre deux demi-alternances successives de la tension au point G, on donne une valeur suffisante au temps de remontée de l'impulsion de tension apparaissant au point K. De toute façon, les intervalles en question sont très brefs vu que, dès que la tension $V_o$ atteint une valeur correspondant à un courant de fuite dangereux, la chaîne des amplificateurs $A_1$ et $A_n$ est saturée et transforme les demi-alternances qu'elle reçoit en signaux contigus quasiment rectangulaires.

Pour que la coupure définitive ci-dessus ne puisse pas être neutralisée trop aisément par l'usager, il peut être avantageux de commander en même temps que celle-ci la destruction d'un fusible : dans cette dernière hypothèse, on relie avantageusement le circuit 12 ci-dessus ou tout autre circuit comportant un tel fusible à la seconde sortie de la bascule 30 de type D, ainsi qu'il a été schématisé sur la figure 4.

L'ensemble des composants portant les références 7 à 27 peuvent être miniaturisés, voire même constitués au moins en partie à l'aide de circuits intégrés, de façon à pouvoir être tous logés dans le boîtier relativement peu encombrant d'une prise de courant mobile.

Dans le cas où l'ensemble des composants électroniques du disjoncteur et notamment de ceux constituant le circuit de réarmement automatique seraient intégrés en un seul circuit miniaturisé, il pourra être avantageux de constituer les circuits monostables et les circuits de retard par des compteurs d'impulsions, tous synchronisés par une même horloge.

L'ensemble des circuits logiques du disjoncteur peuvent être constitués par un microordinateur.

En suite de quoi et quel que soit le mode de réalisation adopté, on dispose finalement d'un disjoncteur dont la constitution et le fonctionnement résultent suffisamment de ce qui précède.

Ce disjoncteur présente de nombreux avantages sur ceux antérieurement connus, notamment les suivants :

— il assure une protection efficace à la fois vis-à-vis des courants de fuite d'intensité dangereuse, par une réponse alors rapide, et vis-à-vis des courants de fuite moins intenses, la réponse étant d'autant plus lente que le courant de fuite est moins intense, la disjonction étant même assurée par des courants de fuite non dangereux, mais prolongés et désagréables,

— ce disjoncteur demeure insensible aux parasites électriques intenses et brefs (ou même longs dans un mode de réalisation préféré),

— il assure également une protection du récepteur 1 dans le cas de coupure de l'un de ses fils d'alimentation 2 et 3 et/ou dans le cas d'une défaillance des moyens électroniques 7 à 27, vu l'impossibilité d'appliquer alors à ce récepteur la tension du réseau, par suite de l'adoption pour le relais 11 de contacts « normalement ouverts », c'est-à-dire ouverts en absence d'excitation électrique de ce relais.

**Revendications**

1. Disjoncteur destiné à couper automatiquement l'alimentation en courant alternatif d'un récepteur électrique (1) dès l'apparition d'un courant de fuite entre un point quelconque de ce récepteur (1) et la masse, comprenant un transformateur différentiel (7) monté sur les fils d'alimentation (2, 3) reliant le récepteur (1) à une source d'alimentation électrique (6), transformateur (7) agencé de façon à engendrer automatiquement dans un autre fil conducteur (8) une tension électrique $V_o$ lorsqu'il y a déséquilibre entre les courants dans lesdits fils d'alimentation (2, 3) et des moyens pour exploiter ladite tension $V_o$ de façon à ouvrir automatiquement un interrupteur (9, 10) monté sur l'un au moins desdits fils d'alimentation (2, 3) dès que l'amplitude de la tension $V_o$ atteint au moins un seuil prédéterminé, ledit interrupteur (9, 10) étant constitué par le contact d'un relais (11) agencé de façon à être ouvert tant que ce relais (11) n'est pas alimenté électriquement, caractérisé en ce que les moyens d'exploitation de la tension $V_o$ sont branchés sur les fils d'alimentation (2, 3) entre la source (6) et l'interrupteur (9, 10) et en ce que ces moyens d'exploitation de la tension $V_o$ comprennent une

chaîne de n amplificateurs en série $A_i$ ($A_1$, $A_2$, ... $A_n$), n étant un entier supérieur à 1 et l'indice i un entier compris entre 1 et n, bornes incluses, dont le premier amplificateur d'indice i = 1 ($A_i$) reçoit la tension $V_o$ après son éventuel redressement, un nombre n de circuits de retard ($R_1$, $R_2$, ... $R_n$), chaque circuit de retard $R_i$ recevant à son entrée la tension de sortie d'un amplificateur $A_i$ et produisant à sa sortie une impulsion de tension $U_i$ retardée d'un retard $t_i$ par rapport à l'instant $t_o$ auquel apparaît la tension $V_o$ lorsque la durée réelle de cette tension $v_o$ est supérieure au retard $t_i$, les valeurs des retards $t_i$ croissant avec l'indice i, un organe (14) à n entrées et à une sortie recevant les impulsions $U_i$ sur ses différentes entrées et émettant un signal de commande sur sa sortie dès que l'amplitude de l'une de ces impulsions $U_i$ atteint ou dépasse un seuil W prédéterminé, et des moyens électroniques (15, 18) connectés à la sortie dudit organe (14) et agencés de façon à couper automatiquement l'alimentation du relais (11) dès émission d'un signal de commande sur ladite sortie.

2. Disjoncteur selon la revendication 1, caractérisé en ce qu'il comprend en outre des moyens de réarmement (16) pour débloquer les moyens électroniques de coupure (15, 18) après qu'ils aient commandé la coupure du relais (11), ce déblocage ayant pour effet d'assurer ou d'autoriser à nouveau l'alimentation électrique du relais (11).

3. Disjoncteur selon la revendication 2, caractérisé en ce que les moyens de réarmement (16) sont commandables manuellement.

4. Disjoncteur selon la revendication 2, caractérisé en ce que les moyens de réarmement sont agencés de façon telle qu'ils soient actionnés automatiquement après une première durée $d_1$ postérieure à chaque coupure de l'alimentation du relais (11), que ce relais (11) soit alors à nouveau alimenté pendant une seconde durée $d_2$ relativement courte, et qu'au terme de cette seconde durée $d_2$ relativement courte, et qu'au terme de cette seconde durée $d_2$ l'alimentation du relais (11) soit maintenue ou à nouveau coupée en fonction de la disparition ou de la persistance à cet instant de la tension de défaut $V_o$.

5. Disjoncteur selon la revendication 4, caractérisé en ce que les moyens de réarmement comprennent deux circuits monostables (28, 29) en cascade, une bascule de type D (30) connectée à la sortie de l'amplificateur d'indice i = n ($A_n$) et à la sortie du second circuit monostable (29), et une porte OU (31) raccordée à la sortie de la bascule de type D (30) et à la sortie du premier circuit monostable (28).

6. Disjoncteur selon l'une quelconque des revendications 4 et 5, caractérisé en ce que les moyens de réarmement sont agencés de façon telle que le cycle de réarmement et de nouveau blocage des moyens électroniques de coupure (15, 18) soit répété au moins une fois avant d'aboutir à une coupure définitive en cas de persistance de la tension de défaut $V_o$.

7. Disjoncteur selon l'une quelconque des revendications 4 à 6, caractérisé en ce que les durées $d_1$ et $d_2$ sont respectivement de l'ordre de 100 ms et de 30 ms.

8. Disjoncteur selon l'une quelconque des revendications précédentes, caractérisé en ce que le retard $t_1$ est supérieur à la durée de la portion initiale à grande amplitude des parasites électriques, mais inférieur à la durée maximum admissible pour les courants de fuite de grande intensité, ce retard étant de préférence de l'ordre de 10 à 20 ms.

9. Disjoncteur selon l'une quelconque des revendications précédentes, caractérisé en ce que ses composants sont choisis de façon telle que l'amplitude de l'impulsion sortant du circuit à retard $(R_n)$ d'indice i = n atteigne le seuil W uniquement lorsque l'intensité du courant de fuite dépasse la valeur maximum $I_M$ supportable en régime prolongé par un corps humain, la valeur de cette intensité $I_M$ étant de préférence de l'ordre de 1 mA.

10. Disjoncteur selon l'une quelconque des revendications précédentes, caractérisé en ce que l'un au moins des circuits à retard $R_i$ comprend successivement un circuit en dérivation composé d'une résistance (20) et d'une capacité (21) en parallèle l'une sur l'autre, un premier inverseur (22), une seconde résistance (23), une seconde capacité (24) mise en dérivation sur la sortie de la seconde résistance et un second inverseur (25) dont l'entrée est également connectée à la sortie de la seconde résistance.


**Claims**


1. Circuit breaker for automatically cutting off the alternating current supply of an electrical receiver (1) on the appearance of a leakage current between any point of this receiver (1) and ground, comprising a differential transformer (7) mounted on the supply wires (2, 3) joining the receiver (1) to an electrical supply source (6), said transformer (7) being arranged so as to generate automatically in another conductor wire (8) an electrical voltage $V_o$ when there is an unbalance between the currents flowing in said supply wires (2, 3) and means for exploiting said voltage $V_o$ so as to automatically open a switch (9, 10) mounted on one at least of said supply wires (2, 3) as soon as the amplitude of the voltage $V_o$ reaches at least a predetermined threshold, the abovesaid switch (9, 10) being constituted by the contact of a relay (11) arranged to be open as long as said relay (11) is not supplied electrically, characterized in that the means for exploiting the voltage $V_o$ are connected to the supply wires (2, 3) between the source (6) and the switch (9, 10) and in that said means for exploiting the voltage $V_o$ comprise a chain of n amplifiers $A_i$ in series ($A_1$, $A_2$, ... $A_n$), n being an integer greather than 1 and the index i being a whole number comprised between 1 and n, terminals included, the first amplifier of which, having the index i = 1 ($A_1$)

receives the voltage $V_o$ after its rectification if necessary, a number n of delay circuits ($R_1$, $R_2$, ... $R_n$), each delay circuit $R_i$ receiving on its input the output voltage of an amplifier $A_i$ and generating on its output a voltage pulse $U_i$ delayed of a time delay $t_i$ with respect to the moment $t_o$ where the voltage $V_o$ appears when the actuel duration of said voltage $V_o$ is higher than the time delay $t_i$, the values of the time delays $t_i$ increasing with the index i, a member (14) with n inputs and one output receiving the pulses $U_i$ on its various inputs and emitting a control signal at its output as soon as the amplitude of one of these pulses $U_i$ reaches or exceeds a predetermined threshold W, and electronic means (15, 18) connected to the output of said member (14) and arranged so as to cut automatically the supply of the relay (11) at the time of emission of a control signal at said output.

2. Circuit breaker according to claim 1, characterized in that it comprises, in addition, resetting means (16) for unblocking the electronic cutoff means (15, 18) after they have actuated the cutoff of the relay (11), said unlocking having the effect of ensuring or again permitting the electrical supply of the relay (11).

3. Circuit breaker according to claim 2, characterized in that the resetting means (16) are actuatable manually.

4. Circuit breaker according to claim 2, characterized in that the resetting means are arranged so that they are actuated automatically after a first period $d_1$ subsequent to each cutoff of the supply of the relay (11), that this relay (11) is again supplied for a second relatively short period $d_2$, and that at the end of this second period $d_2$ the supply of the relay (11) is maintained or again cut off according to the disappearance or the persistance at this moment of the faulty voltage $V_o$.

5. Circuit breaker according to claim 4, characterized in that the resetting means comprise two monostable circuits (28, 29) in cascade, a D type flip-flop circuit (30) connected to the output of the amplifier having the index i = n ($A_n$) and to the output of the second monostable circuit (29), and an OR gate (31) connected to the output of the D type flip-flop circuit (30) and to the output of the first monostable circuit (28).

6. Circuit breaker according to any one of the claims 4 and 5, characterized in that the resetting means are arranged so that the cycle of resetting and reblocking the electronic cutoff means (15, 18) is repeated at least once before arriving at a final cutoff in the case of persistance of the faulty voltage $V_o$.

7. Circuit breaker according to any one of the claims 4 to 6, characterized in that the periods $d_1$ and $d_2$ are respectively of the order of 100 ms and 30 ms.

8. Circuit breaker according to any one of the preceding claims, characterized in that the time delay $t_1$ is greater than the duration of the initial large amplitude portion of the electrical disturbance, but less than the maximum admissible duration for the high intensity leakage currents, this time delay being preferably of the order of 10 to 20 ms.

9. Circuit breaker according to any one of the preceding claims, characterized in that its components are selected so that the amplitude of the pulse emerging from the time delay circuit ($R_n$) having the index i = n reaches a threshold W only when the intensity of the leakage current exceeds the maximum value $I_M$ that can be supported for a long period by a human body, the value of this intensity $I_M$ being preferably of the order of 1 mA.

10. Circuit breaker according to anyone of the preceding claims, characterized in that one at least of the delay circuits $R_i$ comprises successively a branch circuit composed of a resistor (20) and a capacitor (21) in parallel with one another, a first inverter (22), a second resistor (23), a second capacitor (24) branched to the output of the second resistor and a second inverter (25) whose input is also connected to the output of the second resistor.

## Patentansprüche

1. Ausschalter zum automatischen Unterbrechen der Wechselstromspeisung eines elektrischen Verbrauchers (1) beim Auftreten eines Fehlerstroms zwischen einem Punkt dieses Verbrauchers (1) und Masse, mit einem Differentialtransformator (7), der an den den Verbraucher (1) mit einer elektrischen Speisequelle (16) verbindenden Speiseleitungsdrähten (2, 3) montiert und derart angeordnet ist, daß er an einem weiteren Leitungsdraht (8) eine elektrische Fehlerspannung $V_o$ erzeugt, wenn zwischen den in den genannten Speiseleitungsdrähten (2, 3) fließenden Ungleichgewicht Strömen besteht, sowie mit Mitteln, die die genannte Fehlerspannung $V_o$ in der Weise auswerten, daß sie einen in wenigstens einem der genannten Speiseleitungsdrähte (2, 3) montierten Schalter (9, 10) automatisch öffnen, wenn die Amplitude der Fehlerspannung $V_o$ wenigstens einen vorbestimmten Schwellenwert erreicht, wobei der Schalter (9, 10) von dem Kontakt eines Relais (11) gebildet ist, der derart angeordnet ist, daß er öffnet, wenn das Relais (11) nicht elektrisch gespeist wird, dadurch gekennzeichnet, daß die Mittel zur Auswertung der Fehlerspannung $V_o$ in einem Abzweig der Speiseleitungsdrähte (2, 3) zwischen der Speisequelle (6) und dem Schalter (9, 10) angeordnet sind und folgende Teile umfassen : eine Kette von n in Reihe geschalteten Verstärkern $A_i$ ($A_1$, $A_2$, ... $A_n$), wobei n ganzzahlig und größer als 1 und i eine zwischen 1 und n liegende ganze Zahl einschließlich der Grenzen ist und wobei dem ersten Verstärker ($A_1$) mit dem Index 1 die Fehlerspannung $V_o$ gegebenenfalls nach einer Gleichrichtung zugeführt wird, eine Anzahl n von Verzögerungsschaltungen ($R_1$, $R_2$, ... $R_n$), wobei jede Verzögerungsschaltung $R_i$ an ihrem Eingang die Ausgangsspannung eines Verstärkers $A_i$ aufnimmt und an ihrem Ausgang einen Spannungsimpuls $U_i$ abgibt, der eine Verzögerung $t_i$ gegen-

über dem Zeitpunkt $t_o$ aufweist, in welchem die Spannung $V_o$ auftritt, wenn die tatsächliche Dauer dieser Spannung $V_o$ größer ist als die Verzögerung $t_i$, wobei die Werte der Verzögerung $t_i$ mit dem Index i zunehmen, ein Organ (14) mit n Eingängen und einem Ausgang, das an seinen verschiedenen Eingängen die Impulse $U_i$ aufnimmt und an seinem Ausgang ein Steuersignal abgibt, wenn die Amplitude eines dieser Impulse $U_i$ einen vorbestimmten Schwellenwert W erreicht oder überschreitet, sowie elektronische Unterbrechermittel (15, 18), die mit dem Ausgang des genannten Organs (14) verbunden und derart angeordnet sind, daß sie die Speisung des Relais (11) automatisch unterbrechen, wenn an dem genannten Ausgang ein Steuersignal ausgegeben wird.

2. Ausschalter nach Anspruch 1, dadurch gekennzeichnet, daß außerdem Rückstellmittel (16) vorgesehen sind, durch die die elektronischen Unterbrechermittel (15, 18) deblockierbar sind, nachdem sie die Speisung des Relais (11) aufgetrennt haben, wobei die Deblockierung bewirkt, daß eine erneute elektrische Speisung des Relais (11) bewirkt oder zugelassen wird.

3. Ausschalter nach Anspruch 2, dadurch gekennzeichnet, daß die Rückstellmittel (16) manuell steuerbar sind.

4. Ausschalter nach Anspruch 2, dadurch gekennzeichnet, daß die Rückstellmittel (16) derart angeordnet sind, daß sie nach Ablauf einer ersten Zeitspanne $d_1$ nach jeder Unterbrechung der Speisung des Relais (11) automatisch betätigt werden, daß das Relais (11) dann während einer zweiten vergleichsweise kurzen Zeitspanne $d_2$ von neuem gespeist wird und daß die Speisung des Relais (11) am Ende der zweiten Zeitspanne $d_2$ entweder aufrecterhalten oder von neuem unterbrachen wird, je nachdem, ob in diesem Zeitpunkt die Fehlerspannung $V_o$ verschwunden oder noch vorhanden ist.

5. Ausschalter nach Anspruch 4, dadurch gekennzeichnet, daß die Rückstellmittel (16) zwei in Kaskade angeordnete monostabile Schaltungen (28, 29), eine mit dem Ausgang des Verstärkers $A_n$ mit dem Index i = n und mit dem Ausgang der zweiten monostabilen Schaltung (29) verbundene D-Kippschaltung (30) sowie ein ODER-Glied (31) umfaßt, das mit dem Ausgang der D-Kippschaltung (30) und mit dem Ausgang der ersten monostabilden Schaltung (28) verbunden ist.

6. Ausschalter nach einem der Ansprüche 4 und 5, dadurch gekennzeichnet, daß die Rückstellmittel (16) derart angeordnet sind, daß der Zyklus der Rückstellung und der erneuten Blockierung der elektronischen Unterbrechermittel (15, 18) wenigstens einmal wiederholt wird, bevor bei Fortbestehen der Fehlerspannung $V_o$ eine entgültige Unterbrechung erfolgt.

7. Ausschalter nach einem der Ansprüche 4 bis 6, dadurch gekennzeichnet, daß die Zeitspannen $d_1$ und $d_2$ in der Größenordnung von 100 ms bzw. 30 ms liegen.

8. Ausschalter nach einem der vorhergehenden Ansprüche, dadurch gekennzeichnet, daß die Verzögerung $t_1$ größer ist als die Dauer des Anfangsabschnitts der parasitären Ströme mit großer Amplitude jedoch kleiner als die maximal zulässige Dauer für die Fehlerströme großer Intensität und vorzugsweise in der Größenordnung von 10 bis 20 ms liegt.

9. Ausschalter nach einem der vorhergehenden Ansprüche, dadurch gekennzeichnet, daß seine Komponenten so bemessen sind, daß die amplitude des Ausgangsimpulses der Verzögerungsschaltung ($R_n$) mit dem Index $i = n$ den Schwellenwert W nur dann erreicht, wenn die Intensität des Fehlerstroms den für einen menschlichen Körper längerzeitig tollerierbaren Maximalwert $I_M$ überschreitet, wobei der Wert dieser Intensität $I_M$ vorzugsweise in der Größenordnung von 1 mA liegt.

10. Ausschalter nach einem der vorhergehenden Ansprüche, dadurch gekennzeichnet, daß wenigstens eine der Verzögerungsschaltungen $R_i$ aufeinanderfolgend einen aus einem Widerstand (20) und einer dazu parallel geschalteten Kapazität (21) bestehenden Querzweig, einen ersten Inverter (22) einen zweiten Widerstand (23), eine am Ausgang des zweiten Widerstands als Querzweig angeordnete zweite Kapazität (24) und einen zweiten Inverter (25) umfaßt, dessen Eingang ebenfalls mit dem Ausgang des Widerstands verbunden ist.

Fig.1.

Fig.2.

Fig.4.

# Fig. 3.

Fig.5.

0 060 790